# EUROPÄISCHE PATENTSCHRIFT

(11) **EP 2 834 474 B1**
(45) Veröffentlichungstag und Bekanntmachung des Hinweises auf die Patenterteilung: **23.08.2017**
(21) Anmeldenummer: 12718906.6
(22) Anmeldetag: 03.04.2012
(51) Int. Cl.: F01D 21/04, F16F 15/315

(54) **SICHERHEITSVORRICHTUNG FÜR DAS BEHÄLTNIS EINER SCHWUNGMASSE**
SAFETY DEVICE FOR THE CONTAINER OF A FLYWHEEL MASS
DISPOSITIF DE SÉCURITÉ DESTINÉ À UN RÉCIPIENT CONTENANT UNE MASSE OSCILLANTE

(43) Veröffentlichungstag der Anmeldung: 11.02.2015
(73) Patentinhaber: Babcock Noell GmbH, 97080 Würzburg (DE)
(72) Erfinder: AMEND, Johannes, 97228 Rottendorf (DE); ZÖLLER, Hilmar, 97440 Werneck-Essleben (DE)
(74) Vertreter: Cohausz & Florack
(86) Internationale Anmeldenummer: PCT/EP2012/001470
(87) Internationale Veröffentlichungsnummer: WO 2013/149626

(56) Entgegenhaltungen:
- US-A1- 2005 188 777

## Beschreibung

Die Erfindung betrifft eine Sicherheitsvorrichtung für das Behältnis einer Schwungmasse nach dem Oberbegriff des ersten Patentanspruches.

Die Erfindung ist überall dort anwendbar, wo Systeme wie Schwungradenergiespeicher in denen sich eine Schwungmasse, die aus einem Faserverbundwerkstoff oder Kompositwerkstoff oder metallischem Werkstoff besteht, sehr schnell dreht, vorhanden sind. Bei diesen Systemen ist es wichtig dafür Sorge zu tragen, dass im Falle einer Fehlfunktion, bei der sich Teile der Schwungmasse ablösen, keine dieser Geschosse das Gehäuse der Maschine verlassen. Die hier vorgeschlagene Vorrichtung soll das Durchschlagen der Gehäusewand durch entsprechende stark beschleunigte Teilchen verhindern.

Zur Abbremsung ballistischer Teilchen ist es nötig, die Energie der Teile, die wie Geschosse wirken, auf möglichst vielfältige Weise zu dissipieren. Üblicherweise werden dafür mehrere robuste Wände aus Stahl oder andere Materialien geschachtelt.

US 2005/188 777 A1 offenbart eine Sicherungsvorrichtung mit einem Behälter einer Schwungmasse, wobei das Behältnis einen Vakuumbehälter darstellt und eine Sicherungsvorrichtung radial um die Schwungmasse zwischen dieser und der Innenwand eines Gehäuses des Behältnisses angeordnet ist und verhindert, dass beschleunigte Teilchen unkontrolliert das Gehäuse verlassen.

EP2013514B1 beschreibt die Schutzhülle, insbesondere für eine Schwungradvorrichtung und einer Umfassungsanordnung, wobei die Gehäuseinnenwand aus Metall hergestellt ist. Eine zweite Gehäuseabdeckung besteht aus Metall oder einem Verbundmaterial. Die Gehäuseaussenhülle ist aus einem hochfesten Metall mit geringer Dichte hergestellt. Das Gehäuse zeichnet sich dadurch aus, dass sich eine Haltekonstruktion mit einem ersten und einem zweiten Klemmring über die Gehäuseabdeckung erstreckt, wobei die Klemmringe miteinander durch einen axialen Stoß absorbierende Elemente verbunden sind. In der Mitte dieser Elemente befindet sich die Schwungradeinrichtung.

Andere Varianten sehen die Verwendung aus Faserverbundwerkstoffen oder besonders strukturierten Materialien vor, wie das in US005387451A beschrieben ist.

Eine weitere Möglichkeit die Energie aufzunehmen, besteht darin bestimmte metallische Formen anzuordnen, die durch die ballistischen Teilchen deformiert werden. Dazu werden verformte Platten aus Stahl hintereinander angeordnet.

US618253181 beschreibt einen Containment-Ring, in welchem verformbare und verformte Platten aus Stahl angeordnet sind, wobei diese Platten unterschiedliche Ausführungen von spiralförmigen elastischen Elementen darstellen, die mit einer Seite mit einem sie umgebenden Zylinder fest verbunden sind, während die andere Seite beweglich angeordnet ist. Durch die Deformation der Platten soll die Energie des Teilchens aufgenommen werden.

Jede der genannten Maßnahmen repräsentiert einen möglichen Weg, die Energie von Teilen aufzunehmen, die sich von der Schwungmasse ablösen oder von dieser beschleunigt werden. Jede der nach dem Stand der Technik bekannten Methoden hat jedoch bezüglich ihrer Effektivität, dem Gewicht und der kostengünstigen Herstellung Nachteile.

Ziel der Erfindung ist es deshalb, eine Vorrichtung zu entwickeln, die die Energie eines ballistischen Geschosses auf möglichst vielen Wegen effektiv dissipieren kann, dabei ein geringes Gewicht aufweist und kostengünstig herstellbar ist.

Diese Aufgabe wird durch eine Vorrichtung nach den Merkmalen des ersten Patentanspruches gelöst.

Unteransprüche geben vorteilhafte Ausgestaltungen der Erfindung wieder.

Die erfindungsgemäße Lösung sieht eine Sicherheitsvorrichtung für das Behältnis einer Schwungmasse vor, das zwischen dieser und dem Gehäuse oder dessen Innenwand angeordnet ist und verhindern soll, dass bewegliche Teile unkontrolliert das Gehäuse verlassen.

Die Erfindung besteht aus Lamellen, die im Inneren eines zylinderförmigen Gehäuses ringförmig angeordnet sind. Die Lamellen können aus einem einzigen Stück bestehen oder sich aus einzelnen Elementen zusammensetzen. Dabei sind die Lamellen nicht mit dem Gehäuse direkt verbunden. Sie sind zwischen einem oder besser zwei die Lamellen haltende Fixierelemente angeordnet, die Ausschnitte aufweisen, die die Vorgabe für die Anordnung der Lamellen bilden. Oberhalb und unterhalb der Anordnung befinden sich zwei Ringe oder Ringsegmente ohne Aussparung, die Abdeckringe. Sie werden mit den anderen Ringen und den Fixierelementen über Stangen zusammengehalten. Die Anordnung dieser Ringe kann mit dem Gehäuse verschraubt, oder verschweißt werden, oder in eine mit dem Gehäuse verbundenen Struktur eingesetzt werden, für die Aussparungen am Sicherheitsbehältnis vorgesehen sind. Um bei Kontakt mit der Schwungmasse deren Rotationsenergie zu dissipieren, kann diese Anordnung auch freilaufend in das Gehäuse eingebaut werden, so dass sie sich mit der Schwungmasse mit drehen kann, wenn diese mit der Vorrichtung in Berührung kommt.
Diese Ringe und die Fixierelemente können aus Stahl oder einem Faserverbundwerksoff bestehen. Dabei können diese Ringe oder Fixierelemente aus einem Stück bestehen, oder sich aus Segmenten aufbauen. Ebenso kann das ganze Sicherheitsbehältnis aus einem Stück bestehen, oder aus einzelnen Moduln aufgebaut sein.

Die Lamellen selbst können aus einzelnen Elementen bestehen, die miteinander mit einer Art Gelenk verbunden sind, so dass diese sich gegeneinander etwas bewegen können, jedoch steif werden, wenn man das Gelenk staucht. Die Lamellen werden so in die Aussparungen gesteckt, dass sie radial gestaucht sind, also steif, und damit eine Wölbung wie ein Kreissegment bilden. Die Wölbung oder das Kreissegment ist der Drehrichtung entgegen gerichtet. Die Lamellen sind so hintereinander angeordnet, dass sie sich bei einer entsprechend starken Deformation auf der Nachbarlamelle abstützen können. Das Einzelelement der Lamelle besteht aus einem leichten Werkstoff, z.B. Komposit oder Metall. Dabei kann das Element entweder aus Vollmaterial bestehen oder einen Hohlraum aufweisen, der beispielsweise mit Material befüllt ist, das standardmäßig zum Schutz vor Schusswaffen eingesetzt wird. Im Weiteren kann zwischen der Lamelle und der Aussparung in den Ringen, die die Anordnung der Lamellen vorgeben, noch ein dämpfendes Material eingebracht werden. Die kann beispielsweise ein weicheres Metall, Plastik, Keramik, ein Kompositwerkstoff, oder ein Faserverbundwerkstoff sein.
Trifft nun ein Geschoss auf diese Anordnung kann seine Energie auf verschiedene Weise dissipiert werden. Zunächst wird Energie dazu verwendet die Wölbung aufzulösen, Dann wird kinetische Energie in eine Bewegung der Elemente umgesetzt, die sich nun gegeneinander bewegen können, daraufhin können die Elemente noch transversal plastisch deformiert werden. Diese Effekte verstärken sich, wenn sich die Lamellen nacheinander aufeinander abstützen und sich der Vorgang an mehreren wiederholt. Dazu kommt noch der Effekt den die Füllung des Elementes auf das Projektil auswirkt, bei dem ebenfalls Energie dissipiert wird. Dabei muss die Vorrichtung eine größere Höhe als die Schwungmasse aufweisen, um auch Teile mit einer vertikalen Impulskomponente abfangen zu können. Abhängig vom Anstand des Ringes zur Schwungmasse ist sollte die Höhe des Sicherheitsbehältnisses das 1,1-fache bis 8-fache der Höhe der Schwungmasse betragen. Ferner kann die Vorrichtung durch einen weiteren Zylinder als Trennwand, von der Schwungmasse getrennt sein, damit keine Teile der Vorrichtung wieder in Kontakt mit der rotierenden Schwungmasse kommen könnten und ihrerseits wieder beschleunigt werden. Es ist von Vorteil diesen Zylinder aus einem Faserverbundwerkstoff aufzubauen und ihn freilaufend in das Sicherheitsbehältnis zu integrieren.

Der Vorteil des Systems ist die Integration vieler verschiedener Möglichkeiten der Energiedissipation eines Projektils in einem System. Ein weiterer Vorteil liegt in dem stark modularen Aufbau, der es leicht macht, einzelne Teile auszutauschen.

Im Folgenden wird die Erfindung an acht Figuren und einem Ausführungsbeispiel näher erläutert. Die Figuren zeigen:
- Figur 1:: Fixierungselement in schematischer Darstellung und in einer Ansicht von oben.
- Figur 2:: Schematische Darstellung des Fixierungselementes mit aus Elementen aufgebauten Lamellen in Ansicht von oben.
- Figur 3:: Ausschnitt von Figur 2 mit Vergrößerung der Lamellen und deren Elemente.
- Figur 4:: Darstellung in Gesamtansicht des Sicherheitsbehältnisses mit den oberhalb und unterhalb angeordneten Ringen.
- Figur 5:: Ansicht des Sicherheitsbehältnisses aus Segmenten aufgebaut in perspektivischer Darstellung.
- Figur 6:: Schematische Darstellung eines Schwungradspeichers mit Kaltfläche und Fixierelement mit Faserverbundwerkstoff.
- Figur 7:: Vergrößerung des in Figur 6 markierten Bereiches
- Figur 8:: Aufsicht auf Schnitt A-A aus Figur 6.

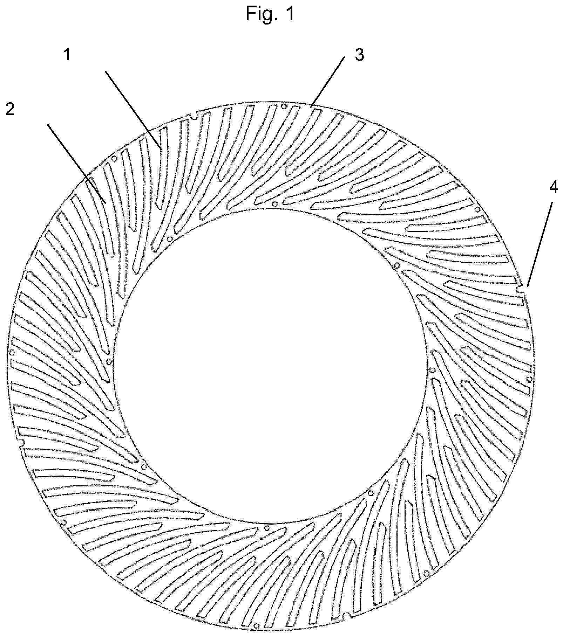

Die *Figur 1* *zeigt* in schematischer Darstellung und in Ansicht von oben ein Fixierelement 1, wie dieses zur Fixierung der Lamellen 5 zwischen den Abdeckringen 12 oder Segmenten 13 angeordnet ist und die Lamellen 5 in ihrer vorgesehenen Position hält. Grundsätzlich genügt es, ein einziges Fixierungselement 1 anzuordnen, vorteilhaft ist es allerdings, von diesen Elementen wenigstens zwei Fixierelemente 1 anzuordnen. Jedes Fixierelement 1 weist Aussparungen 2 für die Lamellen 5 in der gezeigten Art auf. Vorteilhaft ist es, im Fixierelement 1 Öffnungen oder Löcher 3 für die Verbindungsstangen 7 der Abdeckringe 12 oder Segmente13 in regelmäßigen Abständen anzuordnen. Weiterhin weist das gezeigte Fixierelement 1 eine Aussparung 4 zum Einpassen in die Haltestruktur des Sicherheitsbehältnisses in den Behälter 15 auf.

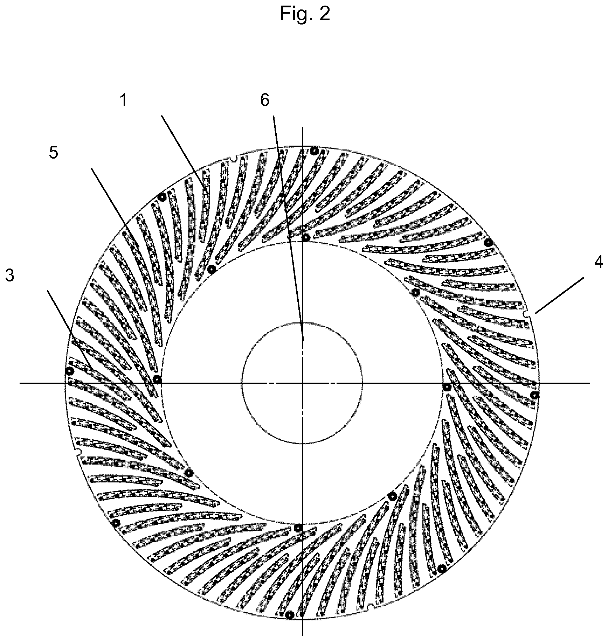

Die *Figur 2* zeigt, wie die Lamellen 5 in das Fixierelement 1 im Einbauzustand eingebracht sind, wobei das Fixierelement 1 mit den Lamellen 5 die Schwungmasse 6 umgibt.

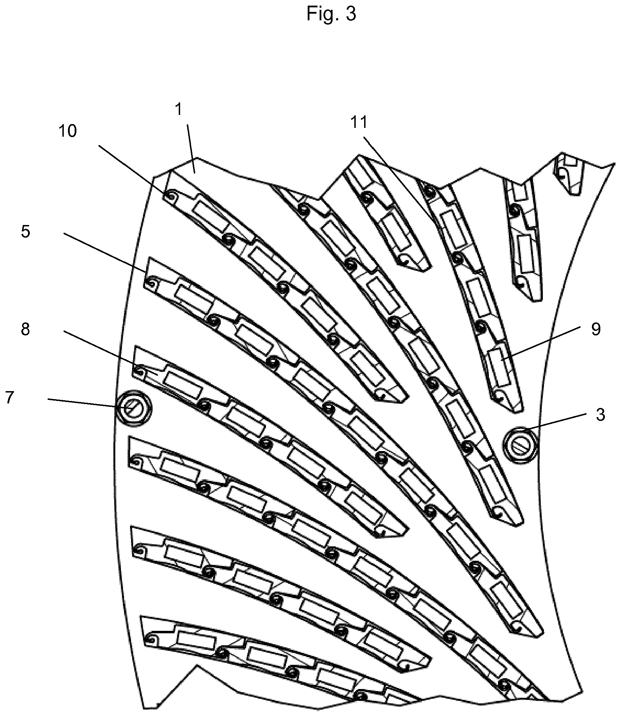

Eine Vergrößerung zeigt ein Ausschnitt aus Figur 2, der in *Figur 3* dargestellt wird. Jede der Lamellen 5 ist aus Einzelelementen 8 aufgebaut, die durch Gelenkteile 10 zwischen den Einzelelementen 8 miteinander verbunden sind. Dadurch sind die Lamellen 5 beweglich und für ihre Dämpfungsaufgabe geeignet. In den Einzelelementen 8 jeder Lamelle sind Hohlräume 9 angeordnet, die mit Dämpfungsmaterial 11 gefüllt sein können. Weiterhin kann Dämpfungsmaterial 11 in den Aussparungen zwischen den Lamellen 5 und den Fixierelementen 1 angeordnet sein. Durch die Fixierelemente 1 ragen Verbindungsstege 7, mit denen die oben und unten angeordneten Abdeckringe 12 oder Segmente 13 verbunden sind.

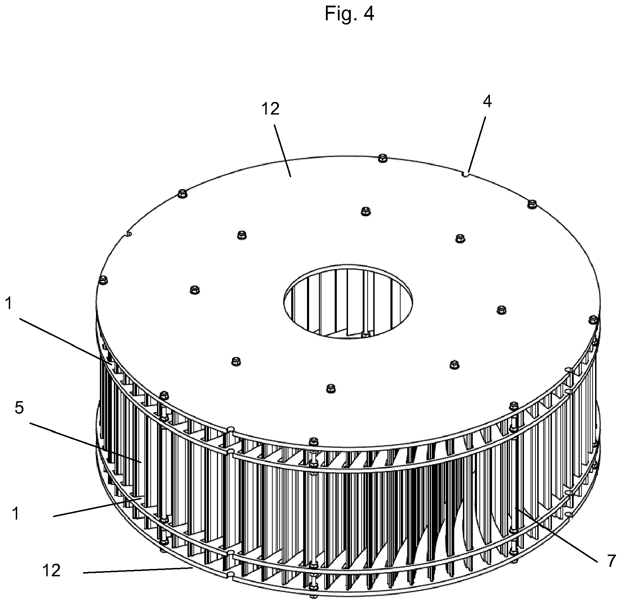

Die *Figur 4* zeigt die Darstellung der Gesamtansicht des Sicherheitsbehältnisses mit den oberhalb und unterhalb angeordneten Ringen 12, die mit Aussparungen 4 versehen sind und zwischen denen sich die Fixierelemente 1 mit den Lamellen 5 befinden. Die Abdeckringe 12 sind miteinander und mit den Fixierelementen 1 über Verbindungsstangen 7 miteinander verbunden.

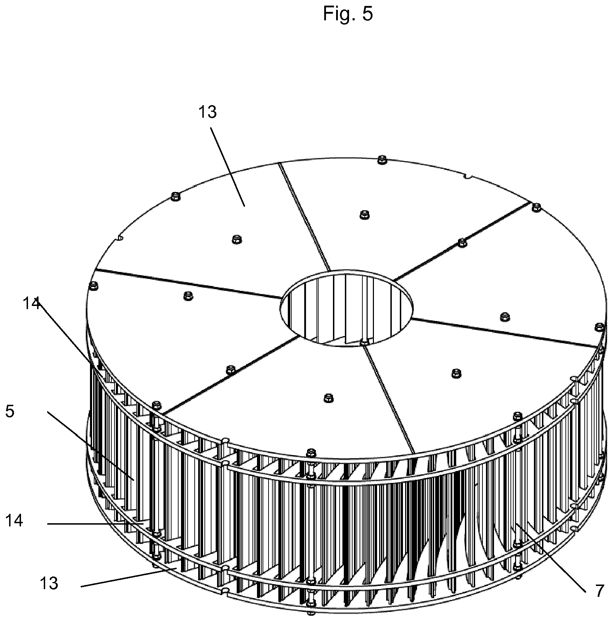

Wie die *Figur 5* zeigt, können die Abdeckringe auch aus einzelnen Segmenten 13 ausgebildet sein. Auch die Fixierelemente können Segmente 14 bilden, was ihre Wirkung und die Montage in vorteilhafter Weise beeinflusst.

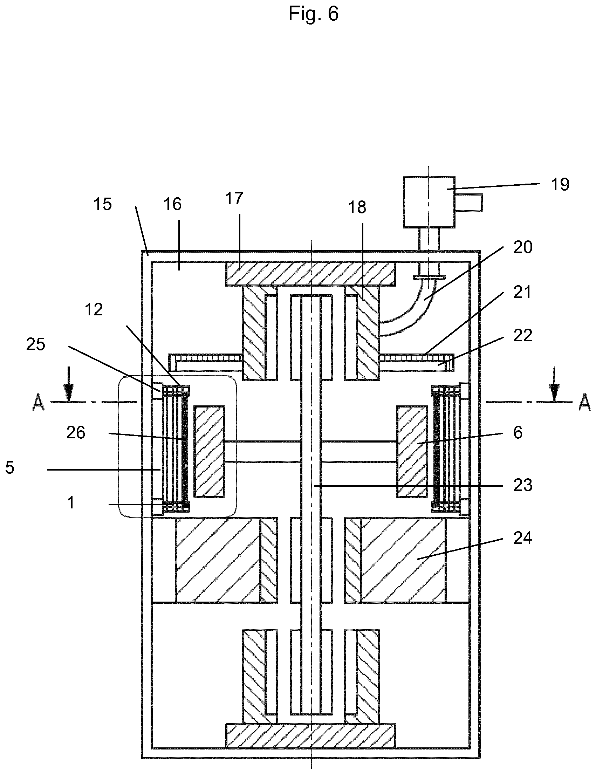

Die *Figur 6* zeigt einen Schwungradspeicher mit der Schwungmasse 6 in einem Behälter 15, in dem sich ein Vakuum 16 befindet. Die Schwungmasse 6 dreht sich um eine Rotorwelle 23, die beidseitig in einem supraleitenden Lager 18 angeordnet ist, welches in einer Aufhängung 17 ruht und mit dem Behälter 15 verbunden ist, wobei am supraleitenden Lager 18 eine Kaltfläche 22 mit einer Isolierung 21 angeordnet ist, so dass durch anfrierende Gasteile das Vakuum 16 im Behälter 15 stabil bleibt oder erhöht wird.

Die Kühlung des supraleitenden Lagers 18 erfolgt über den Kryokühler 19, der eine Kühlanbindung 20 zum supraleitenden Lager 18 aufweist, wobei als Antrieb für die Schwungmasse 6 der Motor/Generator 24 dient.

Die Schwungmasse 6 ist von der erfindungsgemäßen Sicherheitsvorrichtung umgeben, die auf einer Haltestruktur 25 an der Innenseite des Behälters 15 beweglich angeordnet ist, so dass die Sicherheitsvorrichtung sich im Fall einer Zerstörung der Schwungmasse 6 mit der Schwungmasse mit drehen kann. Die Sicherheitsvorrichtung mit ihren Abdeckringen 12 und den Fixierelementen 1 sowie den Lamellen 5 weist in Richtung auf die Schwungmasse 6 eine Trennwand 26 auf, die aus Faserverbundstoff besteht. Diese Trennwand soll ein Zurückfallen von Teilen aus der Sicherheitsvorrichtung verhindern.

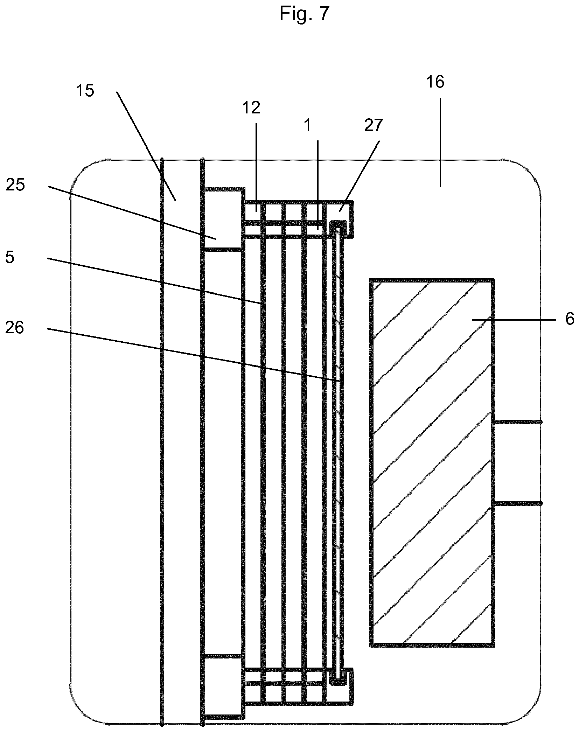

Die *Figur* 7 zeigt eine Vergrößerung des in Figur 6 markierten Bereiches. An dem Behälter 15 ist die Haltestruktur 25 für die Sicherheitsvorrichtung befestigt, die aus dem oberen und dem unteren Abdeckring 12 besteht, wobei zwischen den Abdeckringen 12 die Fixierelemente 1, die Lamellen 5 und die Trennwand 26 des freilaufenden Zylinders aus Verbundfaserwerkstoff angeordnet sind. Die Trennwand 26 wird durch die Halterungen 27 gehalten. Weiterhin ist die Schwungmasse 6 im Vakuum 16 gezeigt.

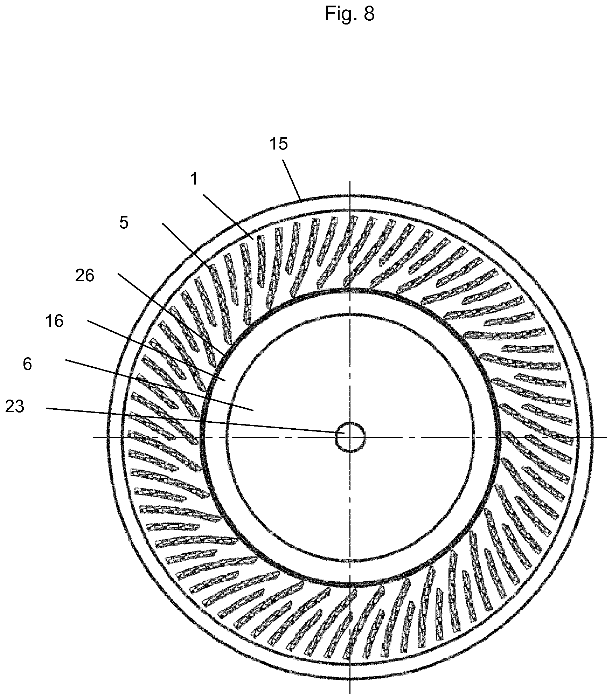

Die *Figur 8* zeigt den Schnitt A-A aus Figur 6 in einer Ansicht von oben. Um die Schwungmasse 6 ist die Trennwand 26 angeordnet, die verhindern soll, dass Teile, die von den Lamellen 5 aufgefangen wurden, die Sicherheitsvorrichtung wieder verlassen, wobei die Lamellen 5 zwischen den Fixierelementen 1 innerhalb des Behälters 15 angeordnet sind. Die Schwungmasse 6 dreht sich auf der Rotorwelle 23.

### Bezugszeichenliste:

- 1: Fixierungselement
- 2: Aussparung für Lamelle
- 3: Loch für Verbindungsstange der Ringe
- 4: Aussparung zum einpassen in die Haltestruktur des Sicherheitsbehältnisses
- 5: Lamelle, aus einzelnen Elementen aufgebaut
- 6: Schwungmasse
- 7: Verbindungsstange
- 8: Einzelelement einer Lamelle
- 9: Hohlraum bzw. Füllvolumen des Einzelelementes
- 10: Gelenkteil zwischen Einzelelementen
- 11: Dämpfungsmaterial in Aussparung zwischen Lamelle und Fixierelement
- 12: Abdeckring
- 13: Segment Abdeckring
- 14: Segment Fixierelement
- 15: Behälter wie Vakuumbehälter
- 16: Vakuum
- 17: Aufhängung des supraleitenden Lagers
- 18: Supraleitendes Lager
- 19: Kryokühler
- 20: Kühlanbindung
- 21: Isolation
- 22: Kaltfläche
- 23: Rotorwelle
- 24: Motor/Generator
- 25: Haltestruktur des Sicherheitsbehältnisses
- 26: Trennwand eines freilaufenden Zylinders aus Faserverbundwerkstoff
- 27: Halterung für freilaufenden Zylinder aus Faserverbundwerkstoff

## Patentansprüche

1. Eine Sicherheitsvorrichtung mit einem Behältnis (15) einer Schwungmasse (6), wobei das Behältnis ein Vakuumbehälter ist, wobei die Sicherheitsvorrichtung radial um die Schwungmasse (6) zwischen dieser und der Innenwand eines Gehäuses des Behältnisses angeordnet ist und verhindert, dass beschleunigte Teilchen unkontrolliert das Gehäuse verlassen, bestehend aus
- radial um die Schwungmasse (6) angeordnete Lamellen (5) zwischen der Innenwand des äußeren Vakuumbehälters (15) und der Schwungmasse (6), wobei die Lamellen von einem Fixierelement (1) zwischen zwei Abdeckringen (12) oder Segmenten (13) gehalten werden.

2. Sicherheitsvorrichtung nach Anspruch 1, **dadurch gekennzeichnet, dass** jede Lamelle (5) aus Einzelelementen (8) besteht, die über Gelenkteile (10) miteinander verbunden sind.

3. Sicherheitsvorrichtung nach den Ansprüchen 1 bis 2, **dadurch gekennzeichnet, dass** jede Lamelle (5) in Form eines Kreissegmentes zwischen den Ringen (12) oder Ringsegmenten (13) so angeordnet ist, dass sie zusammen mit mindestens einer benachbarten Lamelle (5) auf der Bahn eines sich von der Schwungmasse (6) zur Wand des äußeren Vakuumbehälters (15) bewegenden Teils liegt.

4. Sicherheitsvorrichtung nach den Ansprüchen 1 bis 3, **dadurch gekennzeichnet, dass** zwischen den Lamellen (5) Fixierelemente (1) angeordnet sind.

5. Sicherheitsvorrichtung nach einem der Ansprüche 1 bis 4, **dadurch gekennzeichnet, dass** die Lamelle (5) in ihrem Inneren einen Hohlraum (9) aufweist.

6. Sicherheitsvorrichtung nach Anspruch 5, **dadurch gekennzeichnet, dass** der Hohlraum (9) mit kugelsicherem Material gefüllt ist.

7. Sicherheitsvorrichtung nach einem der Ansprüche 1 bis 6, **dadurch gekennzeichnet, dass** zwischen der Schwungmasse (6) und den Lamellen (5) eine Trennwand (26) angeordnet ist.

8. Sicherheitsvorrichtung nach Anspruch 7, **dadurch gekennzeichnet, dass** die Trennwand (26) aus einem Faserverbundstoff besteht.

9. Sicherheitsvorrichtung nach einem der Ansprüche 1 bis 8, **dadurch gekennzeichnet, dass** auf einer Seite der Lamellen 5 ein Dämpfungsmaterial (11) angeordnet ist.

10. Sicherheitsvorrichtung nach einem der Ansprüche 1 bis 4, **dadurch gekennzeichnet, dass** zwischen den Lamellen (5) und den Fixierelementen (1) dämpfende Elemente (11) angeordnet sind.

11. Sicherheitsvorrichtung nach einem der Ansprüche 1 bis 10, **dadurch gekennzeichnet, dass** die Sicherheitsvorrichtung an einer Haltestruktur (25) im Behälter (15) bewegbar angeordnet ist.

## Claims

1. Safety device with a container (15) of a flywheel mass (6), wherein the container is a vacuum container, wherein the safety device is arranged radially around the flywheel mass (6) between the same and the inner wall of a housing for the container and prevents accelerated particles from exiting the housing in an uncontrolled manner, the safety device consisting of
- fins (5) arranged radially around the flywheel mass (6) between the inner wall of the outer vacuum container (15) and the flywheel mass (6), wherein the fins are held between two cover rings (12) or segments (13) by a fixation element (1).

2. Safety device according to claim 1, **characterised in that** each fin (5) consists of individual elements (8) which are connected to each other by means of articulation pieces (10).

3. Safety device according to claims 1 to 2, **characterised in that** each fin (5) is arranged between the rings (12) or ring segments (13) in the shape of a circular segment such that together with at least one adjacent fin (5) it lies in the path of a part moving from the flywheel mass (6) to the wall of the outer vacuum container (15).

4. Safety device according to claims 1 to 3, **characterised in that** fixation elements (1) are arranged between the fins (5).

5. Safety device according to any one of claims 1 to 4, **characterised in that** the fins (5) have a hollow space (9) in the interior thereof.

6. Safety device according to claim 5, **characterised in that** the hollow space (9) is filled with bulletproof material.

7. Safety device according to any one of claims 1 to 6, **characterised in that** a dividing wall (26) is arranged between the flywheel (6) and the fins (5).

8. Safety device according to claim 7, **characterised in that** the dividing wall (26) is made of a fibre composite material.

9. Safety device according to any one of claims 1 to 8, **characterised in that** a muffling material (11) is arranged on one side of the fins (5).

10. Safety device according to any one of claims 1 to 4, **characterised in that** muffling elements (11) are arranged between the fins (5) and the fixation elements (1).

11. Safety device according to any one of claims 1 to 10, **characterised in that** the safety device is moveably arranged on a holding structure (25) in the container (15).

## Revendications

1. Dispositif de sécurité comprenant un récipient (15) d'une masse d'inertie (6), où le récipient est un récipient sous vide, où le dispositif de sécurité disposé radialement autour de la masse d'inertie (6) est placé entre celle-ci et la paroi intérieure d'un boîtier du récipient, et empêche que des particules accélérées quittent le boîtier de manière incontrôlée, ledit dispositif de sécurité se composant
- de lamelles (5) disposées radialement autour de la masse d'inertie (6) et placées entre la paroi intérieure du récipient sous vide extérieur (15) et la masse d'inertie (6), où les lamelles sont maintenues par un élément de fixation (1) placé entre deux anneaux de recouvrement (12) ou segments (13).

2. Dispositif de sécurité selon la revendication 1, **caractérisé en ce que** chaque lamelle (5) se compose d'éléments individuels (8) qui sont reliés les uns aux autres par des pièces d'articulation (10).

3. Dispositif de sécurité selon les revendications 1 à 2, **caractérisé en ce que** chaque lamelle (5) se présentant sous la forme d'un segment de cercle est disposée entre les anneaux (12) ou segments annulaires (13), de manière telle que ladite lamelle, en association avec au moins une lamelle contiguë (5), se trouve sur la piste d'une pièce se déplaçant depuis la masse d'inertie (6) jusqu'à la paroi du récipient sous vide extérieur (15).

4. Dispositif de sécurité selon les revendications 1 à 3, **caractérisé en ce que** des éléments de fixation (1) sont disposés entre les lamelles (5).

5. Dispositif de sécurité selon l'une quelconque des revendications 1 à 4, **caractérisé en ce que** la lamelle (5) présente, dans sa partie intérieure, un espace creux (9).

6. Dispositif de sécurité selon la revendication 5, **caractérisé en ce que** l'espace creux (9) est rempli d'un matériau à l'épreuve des balles.

7. Dispositif de sécurité selon l'une quelconque des revendications 1 à 6, **caractérisé en ce qu'**une paroi de séparation (26) est disposée entre la masse d'inertie (6) et les lamelles (5).

8. Dispositif de sécurité selon la revendication 7, **caractérisé en ce que** la paroi de séparation (26) est constituée d'un matériau composite renforcé par des fibres.

9. Dispositif de sécurité selon l'une quelconque des revendications 1 à 8, **caractérisé en ce qu'**un matériau amortisseur (11) est disposé sur un côté des lamelles (5).

10. Dispositif de sécurité selon l'une quelconque des revendications 1 à 4, **caractérisé en ce que** des éléments amortisseurs (11) sont disposés entre les lamelles (5) et les éléments de fixation (1).

11. Dispositif de sécurité selon l'une quelconque des revendications 1 à 10, **caractérisé en ce que** le dispositif de sécurité est disposé en étant mobile sur une structure de support (25) placée dans le récipient (15).
